# EUROPEAN PATENT APPLICATION

(11) **EP 4 349 727 A1**
(43) Date of publication of application: **10.04.2024**
(21) Application number: 21944250.6
(22) Date of filing: 10.12.2021
(51) Int. Cl.: B65D 25/36, B65D 3/06, B65D 3/22

(54) **BLANK SHEET AND PAPER CONTAINER**

(30) Priority: 04.06.2021 JP 2021094432
(71) Applicant: Tokan Kogyo Co., Ltd., Tokyo 141-0022 (JP)
(72) Inventor: ASANO, Makoto, Tokyo 141-0022 (JP)
(74) Representative: Rings, Rolf
(86) International application number: PCT/JP2021/045621
(87) International publication number: WO 2022/254758

(57) **Abstract**

[Problem]

Provided is a blank sheet used for a paper container that can reduce warping of the blank sheet and eventually lower a risk of causing clogging between various rollers and the like in a manufacturing line.

[Solution]

A heat insulating outer sleeve 2 as a blank sheet, which is a heat insulating sheet used for a paper cup 1 as a paper container includes coat layers 3 formed after an aqueous coating agent is applied on at least any one of a front surface or a back surface of a sheet body 2A of the heat insulating outer sleeve 2 and the aqueous coating agent dries. The coat layers 3 on the front surface or the back surface of the sheet body 2A are formed at a plurality of positions with non-coat surfaces 4 as intervals provided.

## Description

### TECHNICAL FIELD

The present invention relates to a blank sheet used for a paper container and a paper container including the blank sheet.

### BACKGROUND ART

Conventionally, many paper containers including paper cups have been manufactured using blank sheets using paper as a main material.

For example, Patent Document 1 discloses a paper cup as a paper container with a heat insulating outer sleeve made from a blank sheet wound along an outer periphery of a barrel section of a paper container main body.

In this type of paper container, for the purpose of bonding a heat-seal type and the like, lamination processing is often provided for coating any of a front surface or a back surface of a blank sheet used for the paper container with, for example, a film made of resin or the like.

However, by providing the lamination processing for coating any of a front surface or a back surface of a blank sheet with a film made of resin or the like, when a heating state changes to a normal temperature state, the coated film shrinks, and the blank sheet warps to the coated film side.

Meanwhile, the blank sheet used for the paper container passes between various rollers and the like in a manufacturing line during mass production.

It has uniquely been found that a problem arises in that large warping of the blank sheet at this time increases a risk of causing troubles, such as clogging, when a blank is conveyed on the manufacturing line.
Patent Document 1: JP-A-2016-000623

### DISCLOSURE OF THE INVENTION

### PROBLEMS TO BE SOLVED BY THE INVENTION

Therefore, the present invention has been made in consideration of the above-described problem, and it is an object of the present invention to provide a blank sheet used for a paper container that can reduce warping of the blank sheet and eventually lower a risk of causing clogging between various rollers and the like in a manufacturing line during mass production and a paper container including the blank sheet.

### SOLUTIONS TO THE PROBLEMS

In order to solve the above-described problem, the inventor of the present invention has invented a blank sheet used for a paper container. The blank sheet includes coat layers formed after an aqueous coating agent is applied on at least any one of a front surface or a back surface of a sheet body of the blank sheet and the aqueous coating agent dries. The coat layers on the front surface or the back surface of the sheet body are formed at a plurality of positions at intervals.

A blank sheet according to a first invention is a blank sheet used for a paper container. The blank sheet includes coat layers formed after an aqueous coating agent is applied on at least any one of a front surface or a back surface of a sheet body of the blank sheet and the aqueous coating agent dries. The coat layers on the front surface or the back surface of the sheet body are formed at a plurality of positions at intervals.

In the blank sheet according to a second invention, which is in the first invention, the coat layers at a plurality of positions are formed bilaterally symmetrically on the front surface or the back surface of the sheet body.

In the blank sheet according to a third invention, which is in the first invention or the second invention, the coat layers are provided only on one of the front surface or the back surface of the sheet body.

In the blank sheet according to a fourth invention, which is in any of the first invention to the third invention, the coat layers have a thickness of 5 µm to 20 µm.

In the blank sheet according to a fifth invention, which is in any of the first invention to the fourth invention, a proportion of a coat area occupied by the coat layers on the front surface or the back surface of the sheet body is 80% or less.

In the blank sheet according to a sixth invention, which is in any of the first invention to the fifth invention, a proportion of a coat area occupied by the coat layers on the front surface or the back surface of the sheet body is 17% or more.

In the blank sheet according to a seventh invention, which is in any of the first invention to the sixth invention, a Cobb water absorption capacity difference between the front surface and the back surface of the sheet body on which the coat layers at a plurality of positions are formed is 15.5 g/m² or less.

In the blank sheet according to an eighth invention, which is in any of the first invention to the seventh invention, the blank sheet is a heat insulating sheet that covers an outer surface of a paper container main body of the paper container.

In the blank sheet according to a ninth invention, which is in the eighth invention, the paper container main body is a paper cup main body, and the heat insulating sheet is a heat insulating outer sleeve wound along an outer periphery of a barrel section of the paper cup main body.

A paper container according to a tenth invention includes the blank sheet according to any of the first invention to the ninth invention directly or indirectly on a paper container main body.

A paper cup according to an eleventh invention includes the blank sheet according to the ninth invention as the heat insulating outer sleeve wound along the outer periphery of the barrel section of the paper cup main body.

### EFFECTS OF THE INVENTION

According to the present invention with the above-described configurations, the coat layers are formed after the aqueous coating agent is applied on at least any one of the front surface or the back surface of the sheet body of the blank sheet used for the paper container and the aqueous coating agent dries. The coat layers are formed at a plurality of positions at intervals. As a result of conducting experimental validation, it has been seen that warping of the blank sheet can be reduced. This can lower a risk of causing clogging between various rollers and the like in a manufacturing line during mass production.

### BRIEF DESCRIPTION OF THE DRAWINGS

Fig. 1(a) is a side view illustrating a paper cup partly broken off as a paper container according to an embodiment of the present invention, and Fig. 1(b) is a plan view illustrating a back surface of a heat insulating outer sleeve as a blank sheet, which is a heat insulating sheet for the paper cup in Fig. 1(a).
Fig. 2 is a partially enlarged view illustrating an enlarged part of the back surface of the heat insulating outer sleeve as a blank sheet, which is the heat insulating sheet for the paper cup in Fig. 1(b).
Fig. 3 is a table illustrating results of experimental validation 1.
Fig. 4 is a table illustrating results of experimental validation 2.
Fig. 5 is a table illustrating results of experimental validation 3.
Fig. 6 is a table illustrating results of experimental validation 4.

### DESCRIPTION OF PREFERRED EMBODIMENTS

The following describes an embodiment exemplified by applying the present invention by referring to the drawings.

### [Embodiments]

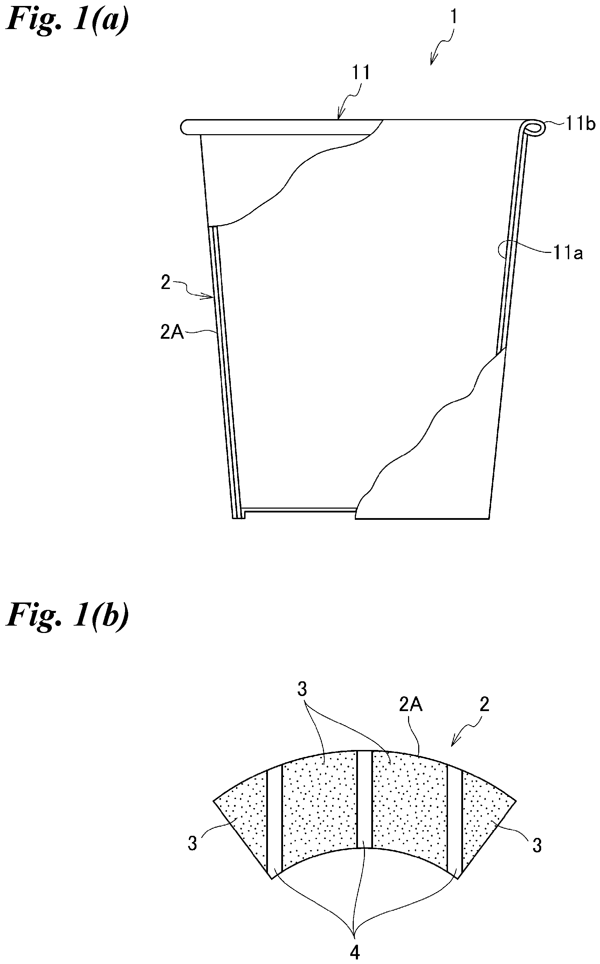

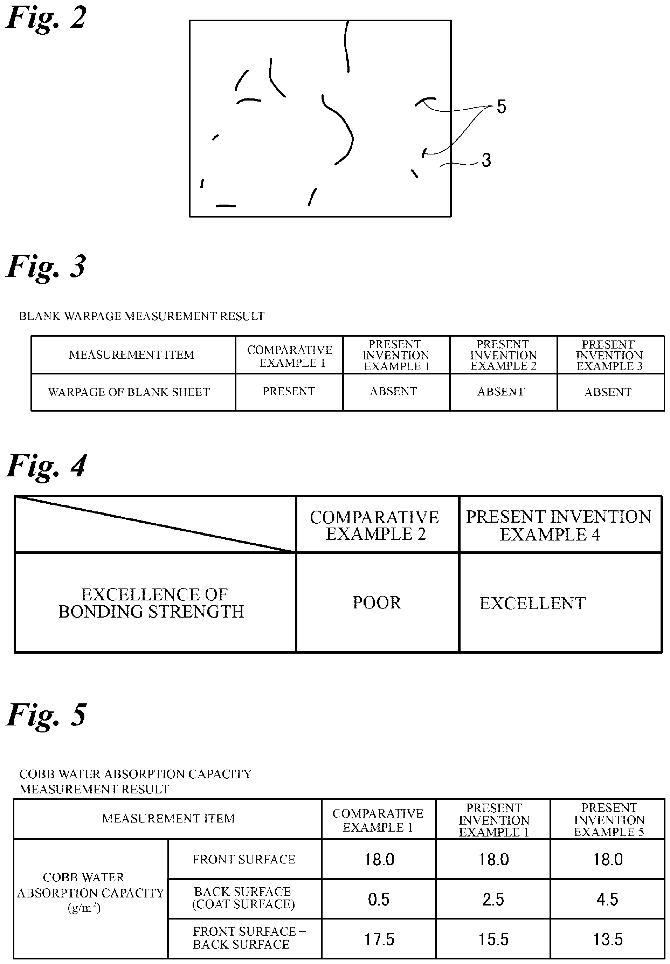

First, using Fig. 1 and Fig. 2, a paper cup 1 as a paper container according to the embodiment of the present invention will be described. Fig. 1(a) is a side view illustrating the paper cup 1 partly broken off as a paper container according to the embodiment of the present invention, and Fig. 1(b) is a plan view illustrating a back surface of a heat insulating outer sleeve 2 as a blank sheet, which is a heat insulating sheet for the paper cup 1 in Fig. 1(a). Fig. 2 is a partially enlarged view illustrating an enlarged part of the back surface of the heat insulating outer sleeve 2 as a blank sheet, which is the heat insulating sheet for the paper cup 1 in Fig. 1(b).

As illustrated in Fig. 1(a), the paper cup 1 as a paper container according to the embodiment of the present invention includes a paper cup main body 11 as a paper container main body and the heat insulating outer sleeve 2 as a blank sheet, which is a heat insulating sheet wound along an outer periphery of a barrel section 11a of the paper cup main body 11.

The paper cup main body 11 is composed of the closed-end and tubular barrel section 11a having a curl section 1 1b at an upper edge thereof.

As illustrated in Fig. 1(b), the heat insulating outer sleeve 2 includes a sheet body 2A using paper as a main material and coat layers 3. The coat layers 3 are formed after an aqueous coating agent is applied on a back surface of the sheet body 2A and the aqueous coating agent dries.

The sheet body 2A has a fan shape and covers an outer surface of the barrel section 11a when wound along the outer periphery of the barrel section 11a of the paper cup main body 11.

The coat layers 3 are formed at a plurality of positions on the back surface of the sheet body 2A with non-coat surfaces 4 as intervals provided.

These coat layers 3 at a plurality of positions have approximately identical areas, and the non-coat surfaces 4 as intervals are approximately identical. Then, these coat layers 3 at a plurality of positions are bilaterally symmetrical on the back surface of the sheet body 2A.

These coat layers 3 at a plurality of positions are not limited to a vertical stripe shape as illustrated in Fig. 1(b), and for example, other patterns, such as a lateral stripe shape and a lattice shape, may be employed.

Furthermore, as illustrated in Fig. 2, these coat layers 3 at a plurality of positions have a plurality of cracks 5.

Note that these coat layers 3 at a plurality of positions need not have the plurality of cracks 5.

Then, the heat insulating outer sleeve 2 is wound along the outer periphery of the barrel section 11a of the paper cup main body 11 and bonded to be attached by heating the coat layers 3 as a heat seal.

Here, it has been seen that thicknesses of these coat layers 3 at a plurality of positions need to be 5 µm at a minimum considering heat-sealing properties for the purpose of bonding a heat-seal type by these coat layers 3 at a plurality of positions and are preferably from 5 µm to 20 µm because a thickness exceeding 20 µm becomes wasteful. However, other ranges may be employed.

As illustrated in results of experimental validation 1 described below, a proportion of a coat area occupied by the coat layers 3 on the back surface of the sheet body 2A is preferably 80% or less, and more preferably 60% or less.

Additionally, as illustrated in results of experimental validation 2 described below, the proportion of the coat area occupied by the coat layers 3 on the back surface of the sheet body 2A is preferably 17% or more.

Additionally, as illustrated in results of experimental validation 3 described below, a Cobb water absorption capacity difference between a front surface and the back surface of the sheet body 2A on which the coat layers 3 at a plurality of positions are formed is preferably 15.5 g/m² or less.

Furthermore, as illustrated in results of experimental validation 4 described below, when the coat layers 3 at a plurality of positions have the plurality of cracks 5, a percentage of an area occupied by the plurality of cracks 5 on the coat layers 3 is preferably 11.8% or less per unit area (here, the unit area is 1 mm²).

For the purpose of further increasing heat insulating properties and providing a sense of luxury by looking nice to enhance commodity value and the like, the coat layers 3 may be provided also on the front surface of the sheet body 2A.

Examples of resin as a main component of the aqueous coating agent used for forming the coat layers 3 include, for example, polyolefin resin, polypropylene resin, polyethylene resin, modified polypropylene resin, modified polyethylene resin, polyethylenimine resin, ethylene-vinyl acetate copolymer resin, polyolefin ionomer resin, ethylene-acrylic acid copolymer resin, ethylene-methacrylic acid copolymer resin, ethylene-methyl methacrylate copolymer resin, ethylene-vinyl chloride copolymer resin, ethylene-methylacrylate copolymer resin, polyvinyl alcohol resin, acrylic acid resin, acrylic acid copolymer resin, styrene-acrylic acid copolymer resin, methacrylic acid resin, polymethyl methacrylate resin, methacrylic acid copolymer resin, vinyl chloride resin, polyvinylidene chloride resin, vinyl acetate resin, polyurethane resin, polyester resin, polyethylene terephthalate resin, polylactic acid resin, polyhydroxyalkanoic acid resin, polybutylene succinate resin, polyamide resin, copolymer nylon resin, polystyrene resin, styrene-maleic acid copolymer resin, phenol resin, and rosin-modified phenol resin.

Besides, for example, in consideration of the environment, biodegradable resins and the like may be the resin as the main component of the aqueous coating agent used for forming the coat layers 3.

According to the embodiment of the present invention described above, the coat layers 3 are formed after the aqueous coating agent applied on the back surface of the sheet body 2A of the heat insulating outer sleeve 2 as a blank sheet dries. The heat insulating outer sleeve 2 as a blank sheet is a heat insulating sheet used for the paper cup 1 as a paper container. The coat layers 3 are formed at a plurality of positions on the back surface of the sheet body 2A with the non-coat surfaces 4 as intervals provided. As a result of conducing the experimental validation described below, it has been seen that warping of the heat insulating outer sleeve 2 as a blank sheet can be reduced. This can lower a risk of causing troubles, such as blank clogging, on a manufacturing line during mass production.

Additionally, in the embodiment of the present invention, the coat layers 3 are used for bonding of a heat-seal type that is superior to bonding of a cold glue type. In view of this, the embodiment of the present invention has advantages of an improved operating rate, a lowered rejection rate, and the like in mass-producing the paper cup 1.

In the embodiment of the present invention, the coat layers 3 at a plurality of positions have approximately identical areas, and the non-coat surfaces 4 as intervals are approximately identical. Furthermore, these coat layers 3 at a plurality of positions are bilaterally symmetrical on the back surface of the sheet body 2A. In view of this, in the embodiment of the present invention, the uniformity of the bonding strength of the heat insulating outer sleeve 2 to the outer periphery of the barrel section 11a of the paper cup main body 11 can be ensured.

In addition, in the embodiment of the present invention, the coat layers 3 at a plurality of positions have the plurality of cracks 5. In view of this, in the embodiment of the present invention, for example, since it is only necessary to form the coat layers 3 by applying a next application layer over a previous application layer before the previous application layer dries, the coat layers 3 can be formed in a short time, resulting in good manufacturing efficiency.

### [Working Example 1]

The following describes the results of the experimental validation 1 conducted to confirm effects of the present invention.

In the experimental validation 1, fan-shaped blank sheets having a thickness of 0.239 mm and a basis weight of 200 g/m² were used for all samples of Comparative Example 1, Present Invention Example 1, Present Invention Example 2, and Present Invention Example 3.

In the sample of Comparative Example 1, a proportion of a coat area occupied by the coat layers 3 having a thickness of 10 µm on one surface of the blank sheet was 100%.

In the sample of Present Invention Example 1, the proportion of the coat area occupied by the coat layers 3 having a thickness of 10 µm on one surface of the blank sheet was 80%.

In the sample of Present Invention Example 2, the proportion of the coat area occupied by the coat layers 3 having a thickness of 10 µm on one surface of the blank sheet was 60%.

In the sample of Present Invention Example 3, the proportion of the coat area occupied by the coat layers 3 having a thickness of 10 µm on one surface of the blank sheet was 40%.

The presence or absence of warpage in the samples thus configured of Comparative Example 1, Present Invention Example 1, Present Invention Example 2, and Present Invention Example 3 was confirmed. Then, the test results illustrated in Fig. 3 were obtained.

For the aqueous coating agent forming the coat layers 3 of the samples of Comparative Example 1, Present Invention Example 1, Present Invention Example 2, and Present Invention Example 3, an aqueous coating agent (product name: CHEMIPEARL S300) manufactured by Mitsui Chemicals with a 5% diluting solvent (isopropyl alcohol) added was used. In the aqueous coating agent, an ionomer (an ethylene-methacrylic acid copolymer) was the resin as the main component, and a solid content concentration was 35%. The aqueous coating agent was applied so as to achieve a target proportion of the coat area occupied by the coat layers 3 on the one surface of each sample and dried in an oven at 140°C for 50 seconds for preparation.

As illustrated in Fig. 3, the sample of Comparative Example 1 had warpage (a warpage height of 20 mm) on the coat layers 3 side. In contrast to this, the samples of Present Invention Example 1, Present Invention Example 2, and Present Invention Example 3 had no warpage.

Consequently, it was confirmed that the proportion of the coat area occupied by the coat layers 3 on the front surface or the back surface of the sheet body 2A was preferably 80% or less.

### [Working Example 2]

The following describes the results of the experimental validation 2 conducted to confirm the effects of the present invention.

In the experimental validation 2, samples of Comparative Example 2 and Present Invention Example 4 were prepared in a way similar to that of the above experimental validation 1.

In the sample of Comparative Example 2, the proportion of the coat area occupied by the coat layers 3 having a thickness of 10 µm on one surface of the blank sheet was 10.7%.

In the sample of Present Invention Example 4, the proportion of the coat area occupied by the coat layers 3 having a thickness of 10 µm on one surface of the blank sheet was 16.8%.

A peeling test from an adherend was conducted on the samples thus configured of Comparative Example 2 and Present Invention Example 4 to confirm them as being excellent when they had a required bonding strength and as being poor when they did not. Then, the test results illustrated in Fig. 4 were obtained.

As illustrated in Fig. 4, the sample of Comparative Example 2 was poor. In contrast to this, the sample of Present Invention Example 4 was excellent.

Consequently, it was confirmed that the proportion of the coat area occupied by the coat layers 3 on the front surface or the back surface of the sheet body 2A was preferably 17% or more, especially for the purpose of bonding.

### [Working Example 3]

The following describes the results of the experimental validation 3 conducted to confirm the effects of the present invention.

In the experimental validation 3, in addition to the samples of Comparative Example 1 and Present Invention Example 1 used in the experimental validation 1, a sample of Present Invention Example 5 with a proportion of the coat area occupied by the coat layers 3 having a thickness of 10 µm on one surface of the blank sheet being 30% was used.

Then, the Cobb water absorption capacities of the front surface and the back surface of the sheet body 2A of each sample were measured to calculate each Cobb water absorption capacity difference.

Note that the Cobb water absorption capacity measurement was conducted for a measuring time of 2 minutes on a measured area of 20 cm² (JIS P 8140).

As illustrated in Fig. 5, it was confirmed that the Cobb water absorption capacity difference between the front surface and the back surface of the sheet body 2A was 17.5 g/m² in the sample of Comparative Example 1, whereas the Cobb water absorption capacity difference between the front surface and the back surface of the sheet body 2A was 15.5 g/m² or less in the samples of Present Invention Example 1 and Present Invention Example 5.

This supported the fact that when the proportion of the coat area occupied by the coat layers 3 on the front surface or the back surface of the sheet body 2A was 80% or less, a moisture absorption difference between the front surface and the back surface of the sheet body 2A decreased, and the decrease in the moisture absorption difference between the front surface and the back surface of the sheet body 2A could reduce warpage.

### [Working Example 4]

The following describes the results of the experimental validation 4 conducted to confirm the effects of the present invention.

In the experimental validation 4, samples of Comparative Example 3 and Present Invention Example 6, each with a proportion of the coat area occupied by the coat layers 3 having a thickness of 10 µm on one surface of the blank sheet being 80%, were prepared in a way approximately similar to that of the above experimental validation 1. However, unlike the sample of Present Invention Example 1, in the samples of Comparative Example 3 and Present Invention Example 6, the coat layers 3 had the plurality of cracks 5.

In the sample of Comparative Example 3, the percentage of the area occupied by the plurality of cracks 5 on the coat layers 3 is 11.84% per unit area (here, the unit area is 1 mm²).

In the sample of Present Invention Example 6, the percentage of the area occupied by the plurality of cracks 5 on the coat layers 3 is 11.8% per unit area (here, the unit area is 1 mm²).

Five samples thus configured were prepared for each of Comparative Example 3 and Present Invention Example 6 to confirm whether or not there was any case where surfaces of the coat layers 3 lifted.

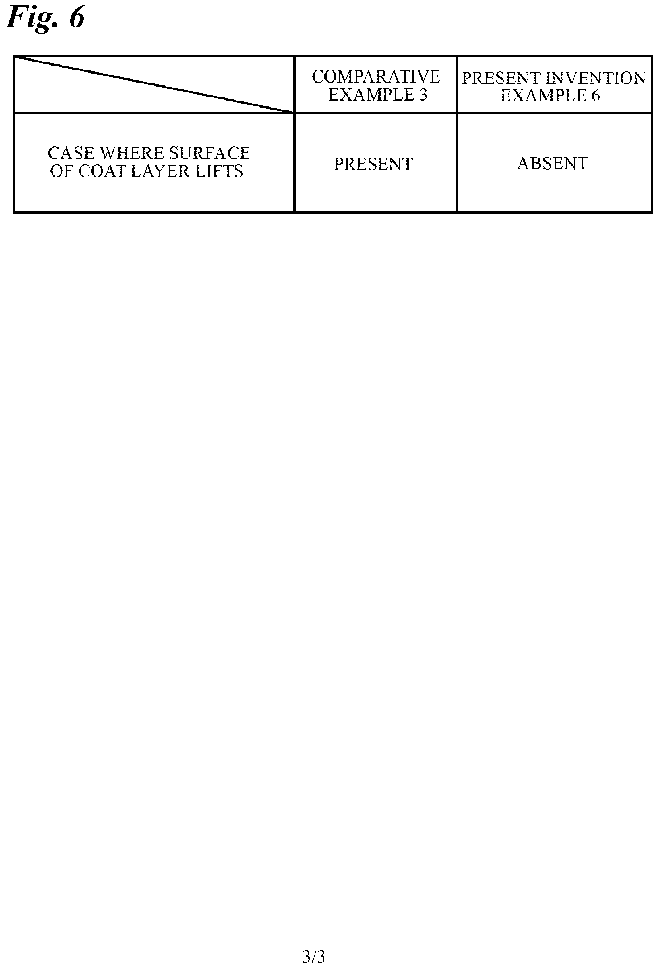

Fig. 6 illustrates the test results. In Comparative Example 3, the surfaces of the coat layers 3 of two out of the five samples lifted.

In contrast to this, in the samples of Present Invention Example 6, not one out of the five samples had the surfaces of the coat layers 3 lifting.

From the test results, when the percentage of the area occupied by the plurality of cracks 5 on the coat layers 3 exceeds 11.8% per unit area (here, the unit area is 1 mm²), the surfaces of the coat layers 3 lift, resulting in slightly inferior quality. In view of this, it was confirmed that while manufacturing efficiency was good when the coat layers 3 at a plurality of positions had the plurality of cracks 5, the percentage of the area occupied by the plurality of cracks 5 on the coat layers 3 was preferably 11.8% or less per unit area (here, the unit area was 1 mm²).

Piecing together the results of the experimental validations 1 to 4 conducted to confirm the effects of the present invention, it is considered that the present invention is especially effective when the coat layers 3 are provided only on one surface of the sheet body 2A.

While the embodiments of the present invention have been described above, the embodiments have been presented as examples, and are not intended to limit the scope of the invention. The novel embodiments described herein can be embodied in a variety of other configurations. Various omissions, substitutions, and changes can be made without departing from the gist of the invention. The embodiments and the modifications thereof are within the scope and the gist of the invention and within the scope of the inventions described in the claims and their equivalents.

In the embodiments described above, while the present invention is applied only to the paper cup 1, it is not limited to this. For example, the present invention may be applied to any paper containers including paper containers for food products and medicinal products, and the like.

### DESCRIPTION OF REFERENCE SIGNS

- 1:: Paper cup (Paper container)
- 11:: Paper cup main body (Paper container main body)
- 11a:: Barrel section
- 11b:: Curl section
- 2:: Heat insulating outer sleeve (Blank sheet)
- 2A:: Sheet body
- 3:: Coat layer
- 4:: Non-coat surface (Interval)
- 5:: Crack

## Claims

1. A blank sheet used for a paper container, comprising
coat layers formed after an aqueous coating agent is applied on at least any one of a front surface or a back surface of a sheet body of the blank sheet and the aqueous coating agent dries, wherein
the coat layers on the front surface or the back surface of the sheet body are formed at a plurality of positions at intervals.

2. The blank sheet according to claim 1, wherein
the coat layers at a plurality of positions are formed bilaterally symmetrically on the front surface or the back surface of the sheet body.

3. The blank sheet according to claim 1 or 2, wherein
the coat layers are provided only on one of the front surface or the back surface of the sheet body.

4. The blank sheet according to any one of claims 1 to 3, wherein
the coat layers have a thickness of 5 µm to 20 µm.

5. The blank sheet according to any one of claims 1 to 4, wherein
a proportion of a coat area occupied by the coat layers on the front surface or the back surface of the sheet body is 80% or less.

6. The blank sheet according to any one of claims 1 to 5, wherein
a proportion of a coat area occupied by the coat layers on the front surface or the back surface of the sheet body is 17% or more.

7. The blank sheet according to any one of claims 1 to 6, wherein
a Cobb water absorption capacity difference between the front surface and the back surface of the sheet body on which the coat layers at a plurality of positions are formed is 15.5 g/m² or less.

8. The blank sheet according to any one of claims 1 to 7, wherein
the blank sheet is a heat insulating sheet that covers an outer surface of a paper container main body of the paper container.

9. The blank sheet according to claim 8, wherein
the paper container main body is a paper cup main body, and
the heat insulating sheet is a heat insulating outer sleeve wound along an outer periphery of a barrel section of the paper cup main body.

10. A paper container comprising
the blank sheet according to any one of claims 1 to 9 directly or indirectly on a paper container main body.

11. A paper cup comprising
the blank sheet according to claim 9 as the heat insulating outer sleeve wound along the outer periphery of the barrel section of the paper cup main body.
